# EUROPEAN PATENT APPLICATION

(11) **EP 2 778 563 A1**
(43) Date of publication of application: **17.09.2014**
(21) Application number: 13158846.9
(22) Date of filing: 12.03.2013
(51) Int. Cl.: F24J 2/14, F24J 2/46, F24J 2/52, F24J 2/54

(54) **Solar concentrator with focal system**

(71) Applicant: Termopower S.L., 28023 Madrid (ES)
(72) Inventor: Carrascosa Pérez, Marco Antonio, 28023 Madrid (ES); Fernández Rodríguez, José Miguel, 28023 Madrid (ES); Martínez Huertas, Damián, 28023 Madrid (ES); Simarro Leal, Joaquín, 28023 Madrid (ES)
(74) Representative: Illescas, Manuel

(57) **Abstract**

This invention refers to a focal system (7) for solar concentrators equipped with at least one heat collection element (1), allowing the linear displacement of the heat collection element (1) along the focal line but no other displacements that reduce the total performance of the solar concentrator.

## Description

### FIELD OF INVENTION

The present invention relates to technologies for concentrating solar power and, more specifically, to parabolic trough solar plants where solar light is concentrated to generate thermosolar power.

In addition, the invention can also be applied to other fields that require solar light concentration, such as concentrated photovoltaic (CPV) technologies, water treatment, photochemical reactors or steam generators, among others.

### BACKGROUND OF THE INVENTION

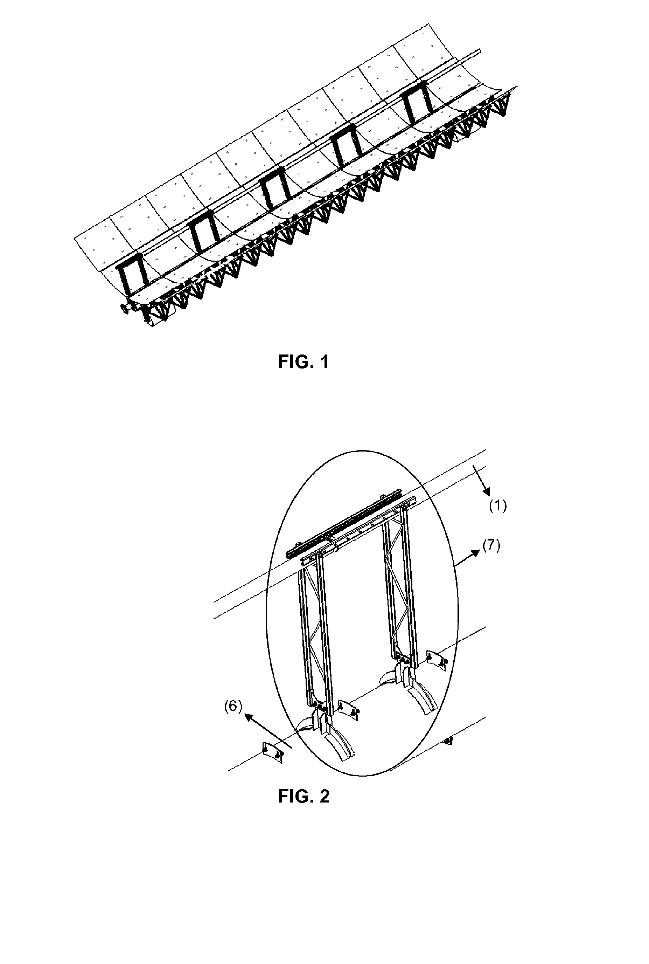

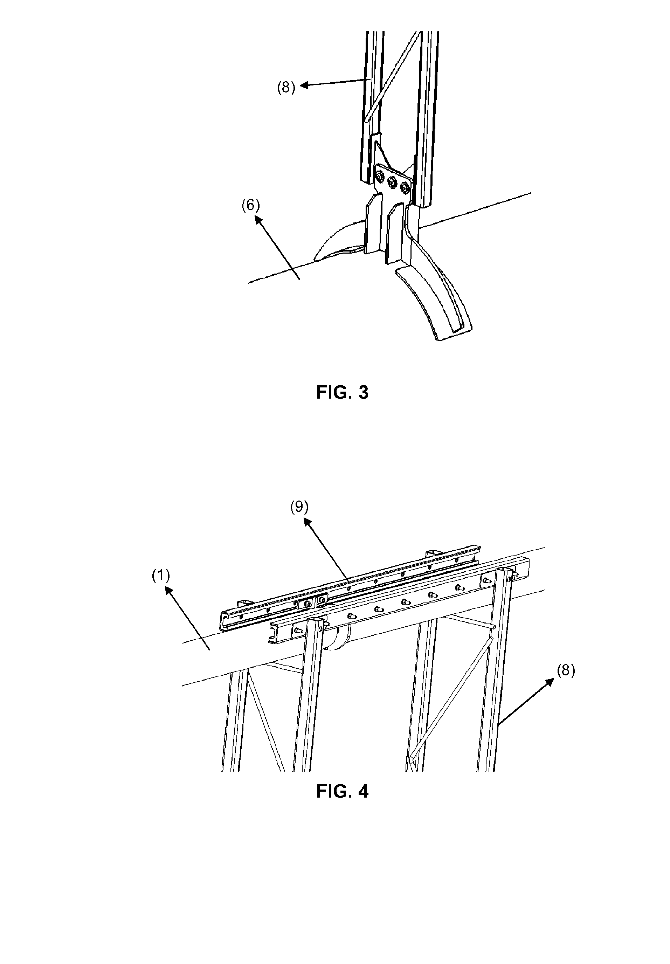

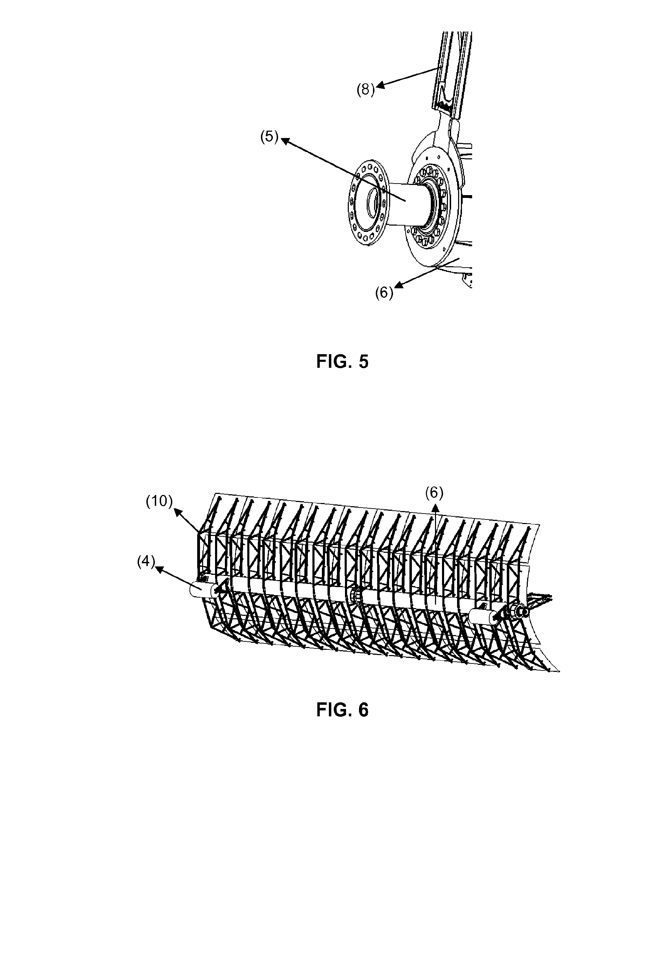

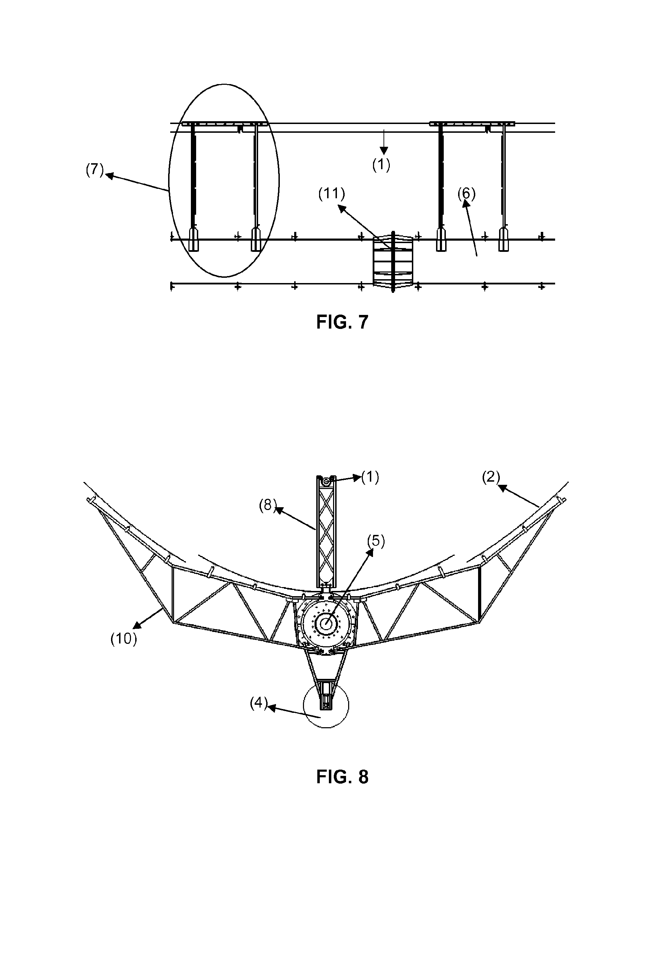

The generation of power by means of solar light concentration in a parabolic trough (See Figures 1-13) is based on the reflexion of the solar light beam onto the named absorber tube or Heat Collection Element, HCE (1). This absorber tube is thermally insulated so the most of the energy is accumulated and transmitted to the heat transport fluid (HTF) that flows inside the absorber tube.

Depending on the nature of this HTF, water steam is produced in heat interchangers or directly inside the absorber tube. This overheated water steam is then conducted into a turbine-alternator system where its expansion is allowed obtaining electric power.

As an alternative, the state of the art includes the possibility of using heat accumulation by molten salt, concrete or others systems.

Parabolic trough designs are generally composed of a reflective surface (2), usually about 4 mm glass mirror or a reflective film attached with adhesive onto a stiffener support, bonded to a rigid, normally metallic, structure (3) that provides the tracking capabilities and withstand the wind and weight loads. This structure supports the reflective surface as well as the HCE where the HTF is heated and, sometimes, includes a secondary reflector over the HTF.

The structure can be based on helical tube (6), usually named torque tube, or a three-dimensional bar welded or fastened structure (torque box or multi-tube structure), with several anchored arms (10) where the reflective surface is fixed.

There are several different designs in the state of the art that could be considered as previously described. Some of them are detailed below.

Patent applications WO/2010/124343 (NEP Solar PTY Ltd.), US 4385430 (Bartels), US 2002/0179138 (Lawheed) and US 4436373 (Kirsch) describe the general method of forming an energy concentrator by using a concave parabolic trough-shaped reflector, or a number of Fresnel reflector elements in a support, to concentrate solar light in a rectangular focal zone where is positioned at least one energy absorber.

Patent applications WO/2011/023699 (Flagsol Gmbh) and US 4178913 (J. A. Hutchinson) propose similar devices and methods but specify that they are based on a torsion tube, also known as torque tube.

Patent application DE 19952276 (Olaf Goebel) describes a parabolic collector with a structure having two mirror-carrying arms. These arms are metallic with a laminar structure and are coupled in an articulated manner to the torque tube. Each arm is wedge shaped and has three curved sides, one of which is adapted to the mirrors are another to the torque tube. There are perforations for mirrors and torque tube anchoring. This design is improved by the patent application WO/2007/034008 (SENER Ingenieria y sistemas S.A.) including ribs to the metallic laminar arms, which were not included in other similar references, as in the patent application US 4138994 (Robert M. Shipley Jr.).

Patent application WO/2002/103256 (ENEA) describes, in a similar way that the previous ones, a solar concentrating module with two-dimensional parabolic profile geometry, comprising one or more rigid self-supporting panels, having a parabolic cross section and a rectilinear longitudinal extension, said panels being comprised of a central sandwich structure including a central honeycomb core and two thin skins. The panels which include the reflective surface are supported onto a torque tube with ribs where the panels are attached with adhesive.

Patent application EP2221558 (Albiasa Collector Trough SL.) defines a parabolic trough collector based on a torque tube, that is formed by different longitudinal sections of tube attached, and with arms that support the reflective area and pass through mentioned torque tube.

In all the referred documents there are different proposals to have the highest possible thermal gain and intercept factor. Intercept factor is the percentage of concentrated energy that is intercepted by the absorber tube.

However, the state of the art designs present the following problems:
- The receiver tube, also known as HCE, moves out of the focal line due to thermal variations or external loads. This generates a fall in the interception factor of the system and, therefore a thermal gain decrease.
- HCE symmetry relative to the solar collector assembly (SCA) centre. HCEs are mounted symmetrically in the centre relative to the drive pylon centre and both endings of the mirror surface area. However, solar light incidence angle is not normal (perpendicular) to the SCE along the year, thus the reflected beam is asymmetric relative to the SCE depending on the incidence angle. This asymmetry is known as Incidence Angle Modifier, IAM, that take into account, among other factors, the irradiated HCE length for any Incidence Angle, shadowing, etc.
- Nowadays, HCE position is conditioned by its attachment system, without any possibility of positioning them in order to improve the optical performance along the whole year depending on the solar field position. For example, when Incidence Angle is not zero degrees, in the north hemisphere, the south area of the thermally expanded absorber tube will remain without radiation while the north area of the collector may have no HCE enough to intercept the reflected radiation.
- Another of the existing problems when increasing the collector's geometry, aiming to reduce the loop number necessary to obtain the same thermal output and, therefore, the plant investment, is the potential reduction of the Intercept Factor due to the optical path increase. In many cases, it is also very complicated to attach large mirror in only four attachment points. Because of this there is a tendency to use six attachment points instead of four. Conventional attachment systems may deform or vary its shape because of attachment stresses. This risk is more likely to appear in six point attachment systems, varying mirror shape, curvature or decreasing its optical quality.
- In order to achieve a good optical quality and intercept factor, systems usually require a high precision manufacturing and expensive and complicated assembly systems.
- The state of the art usually includes the use of expensive flexible plates, spring plates, where the HCE supports are attached aiming permitting the HCE dilation and inevitably allowing the HCE displacement out of the focal line.
- In order to increase the payoff of this kind of power plants, it is necessary to reduce costs.
- Nowadays, solar concentration systems are not stable when submitted to temperature or loads variations and they are not optimized for use the available energy with different incidence angles.

This invention is presented as a solution to the problems in the state of the art mentioned above.

### BRIEF DESCRIPTION OF THE INVENTION

The object of this invention is a parabolic trough design that improves the solar collector performance, as well as a method of correct assembling this collector in order to achieve a high optical quality and, therefore, a high solar field yield. The invention is especially advantageous for high-temperature increase applications, such as in molten salt applications. The system improves considerably the optical performance in any operation mode, and more specifically in the start-up at molten salt minimum working temperature or low Direct Normal Irradiance (DNI).

This object is achieved by a focal system for solar concentrators equipped with at least one heat collection element (HCE), which comprises means configured for maintaining the HCE in a fixed focal line and allowing linear displacements of the HCE along said focal line.

In a preferred embodiment, the focal system comprises at least:
- A pair of HCE supports for maintaining the linear guide in the focal line.
- A pair of linear guide systems comprising respective bearings or friction pads configured for allowing linear displacements of the HCE along the focal line.
- A flange that sustains the HCE and configured to move within the linear guide systems.

Preferably, the focal system is thermally and/or electrically insulated.

A further object of the present invention is a solar concentrator comprising, at least, one focal system according to any of the embodiments described in this application.

Preferably, the solar concentrator comprises a reflective-area support structure based on a torque tube and hollow tube arms.

More preferably, the reflective area is supported onto hollow tube arms, and those arms are conformed by welding structural steel hollow tubes, wherein the concentrator comprises:
- a plurality of U-conformed plates with groove holes, where mirrors are attached, and groove holes tube endings, that allow their assembly on the torque tube.
- an interface between the U-conformed plates and a mirror pad comprising a threaded rod with a plurality of conic seats and nuts.

Preferably, the hollow tube arms are fastened to a plate welded onto the torque tube surface, so that the opposite structure arms are fastened to the same plate.

In a further preferred embodiment, the solar concentrator comprises a torque tube equipped with end plates fastened to another torque tube or to a rotational support.

In another preferred embodiment, the solar concentrator comprises a bearing system on which the solar concentrator can turn. Preferably, the bearing system comprises scrapers to avoid the dirt entry into the bearings or the friction areas.

In a further embodiment of the invention, the solar concentrator comprises a continuous reflective area.

In a further embodiment, the solar concentrator comprises flexible hoses in its endings.

In a further embodiment, the solar concentrator comprises means for generating a continuous tracking movement, the means comprising a hydraulic system with proportional valves.

In a further preferred embodiment, the solar concentrator comprises a tracking closed control loop, which can vary the tracking speed depending of the difference between the collector actual position and the set one.

In a further preferred embodiment, the solar concentrator comprises an HCE-attachment system independent of the HCE supports' position, configured for locating the absorber tubes asymmetrically regarding to the collector.

The solar concentrator of the invention is preferably a parabolic trough and, more preferably, a torque tube-based system, supporting about 164 m² of reflective surface (approximately 142 m² of projected area), divided into 40 mirrors (2). In a preferred embodiment of the invention, the mirrors have two different curvatures, providing a double focal length. Because of the mirror disposition, both focal lengths lay in the same focal line. The mirrors with the higher focal length are located in the position more distant from the torque tube vertical, so they are called outer, while the others are called inner and are placed the nearest to the torque tube vertical.

The reflective surface has preferably a small gap between mirrors of less than 10 mm (0.01 m), except in the gap between outer and inner mirrors, where this distance increases up to almost 200 mm (0.2 m) in order to reduce the wind load onto the reflective surface. In any case, this reflective area can be considered as continuum, reducing the necessary parabolic trough length.

The reflective area is supported onto hollow tube arms (10). These arms are conformed by welding structural steel hollow tubes, reducing the cost impact, and have a serial of U-conformed plates with groove holes, where mirrors are attached, and groove holes tube endings, that allow their assembly on the torque tube.

Interface between these U-conformed plates and the mirror pad is a threaded rod with a serial of conic seats and nuts. This system eases the mirror positioning and attachment, without transmitting to the mirror the stresses due to manufacturing or mounting errors either deforming it. This is a stress free attachment system.

This assembly system reduces the manufacturing precision required, cuts costs and eases the assembly adjustment. This system compensates the possible manufacturing deviations and helps to reduce the mounting optical errors.

Arms are fastened to their corresponding plates, welded to the torque tube (6), which also have groove holes. Two opposite arms are fastened to the same plate, balancing the stress on the torque tube.

The torque tube is a helical tube that works as rotational axis of the structure. In both endings, it has plaques where another torque tube (11) or a rotational support (5) can be fastened.

The rotational support (5) is a very robust item that transmits the torque between consecutive SCEs, reducing the torsion error between both SCE endings that cause optical error and reduces the SCE yield. In addition, this rotational support is the contact surface with the sliding surface, located in the collector pylons (12), where rotational friction is reduced due to both surfaces characteristics. The whole SCE turns around this rotational support.

The collector, while in operation, twists due to the frictions in the rotational supports. In order to compensate weight torque in the system, each parabolic trough is provided of two counterbalances (4). Thus, the gravitational axis is coincident with the torque tube axis. It is possible to regulate the counterbalance position, balancing the torque caused by the friction forces.

Pylons (12) are metallic-welded hollow tube columns that withstand the SCE loads and transmit them to the foundations. Each SCE is supported by two pylons.

The HCE are sustained onto the torque tube by a constant focal system (7). This system permits the HCE displacement due to thermal expansion, but keeping it in the right position, avoiding it displacements out the parabolic trough focal line. It comprises two HCE supports (8) and a linear guide (9). In addition, this system is thermally and electrically insulate, reducing thermal losses and reducing the electrical insulation required if electrical tracing or impedance heating is applied to the piping.

The linear guide (9) is a bearing or friction pad system that allows the linear displacement of the HCE but not others displacements. The linear guide is sustained by two HCE supports (8). Both HCE are parallel and have in their basis several groove holes that are used to correct placing the HCE in the focal line.

The constant focal system are placed in the HCE endings in a way that does not produce shadows nor block solar light, so, added to the always correct focal position, it improves the optical performance and the SCE yield.

The parabolic trough is provided in its endings of flexible hoses (13), reducing the pressure drop in the system and providing more flexibility in the HCE linear displacement.

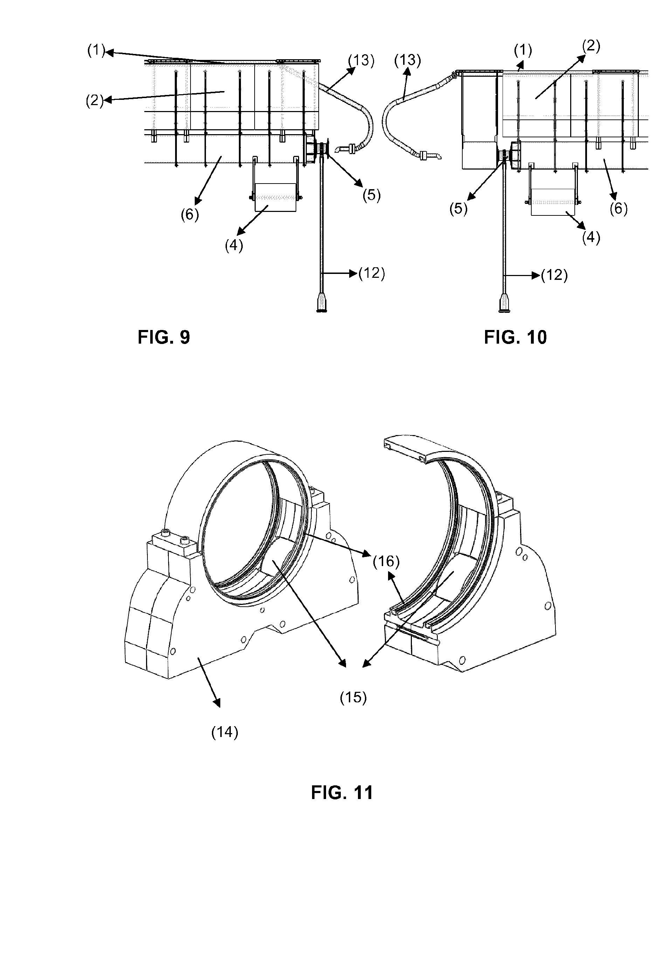

As an innovative characteristic it must be added the linear decentring of the HCE relative to the SCA centre, aiming the exploitation of the reflected solar beam at the parabolic endings. This decentring is adjustable depending on the solar field latitude and is a linear displacement of the whole absorber tube towards the north direction in the north earth hemisphere, as shown in figures 9 (south ending) and 10 (north ending). This improves the optical performance along the year and, therefore, the IAM influence.

In addition, this system allows attaching the HCE in a different position that the HCE support, providing the possibility of positioning this union between HCE where considered necessary without displacing the HCE supports. The HCE flange that supports the welded union between HCEs has flexibility in its positioning.

In a preferred embodiment of this invention, each Solar Collector Element, SCE, comprises two torque tubes (6), two counterbalances (4), forty arms (10) and five constant focal systems (7) assembled.

The main advantages of this design are listed here below.
- The constant focal system keeps the HCE in the focal line of the parabolic trough, increasing the solar plant thermal gain, compared with other systems in the state of the art.
- The constant focal system is thermally and electrically insulate, reducing thermal losses and reducing the electrical insulation required in the parabolic support structure if electrical tracing or impedance heating is applied to the piping.
- The constant focal system is prepared for supporting HCE with different diameters.
- The constant focal system can support a secondary reflector, without varying the positioning of the HCE in the focal line but increasing the performance.
- The constant focal system, and every of its components, have been designed so that they will not block solar beams even with a collector rim angle of about ninety degrees.
- The parabolic trough can rotate onto either bearing or a friction liner systems.
- The mirrored area is almost continuous, increasing the thermal gain of the system.
- The parabolic trough structure presents a high rigidity, withstanding external loads with very low deformations.
- The structure arms are attached to the same metallic plate aiming to compensate the loads on the torque tube.
- The structure arms are formed from welded hollow tubes, increasing the system stiffness.
- The torque tubes have been divided into two parts easing their transport.
- The mirror attachment system comprises a U-conformed plates, threaded rods and conic seats system that reduce the stress on the mirrors.
- The parabolic trough has flexible hoses in their endings, reducing the pressure drops and avoiding the use of ball joints.
- The whole system has been designed in a way that provide a quick assembling process with a very low mounting error
- The use of a position sensor in the two ending SCE moved by the same drive pylon reduce the focal deviation by using the average torsional error for the tracking of the assembly.
- The parabolic-trough collector can rotate either on bearings or friction liners. It is preferred the use of bearings because of the torsional error decrease.
- The bearing design comprises scrapers that avoid the dirt entry into the bearing or onto the friction area, which increases the system life and reduce the possible damages caused by dirt.
- Another feature to reduce the torsional error is a continuous tracking movement based on a hydraulic system with proportional valves. This system will reduce the torsional angle produce to the static friction of the system continuously starting and stopping, also known as discrete tracking. The inclusion of a proportional valve will allow defining a tracking speed depending on the year day. This system could be complete by a tracking closed control loop, which could vary the tracking speed depending of the difference between the collector actual position and the set one. This difference is called the tracking error of the system.

In addition, it must be added the improvements derived from the assembly process:
- The whole absorber tube is linearly decentred from the SCE centre towards the north direction in the north earth hemisphere, aiming the exploitation of the reflected solar beam at the parabolic endings. This is directly shown as an improvement in the Incident Angle Modifier.
- This decentring is adjustable depending on the solar field latitude.

Other characteristics and advantages of this invention may be derived from the detailed description of the invention and from the illustrating figures enclosed.

### DESCRIPTION OF THE FIGURES

Figures 1-13 show several images aiming to ease the understanding of the present invention:
Figure 1 depicts the general description of the parabolic trough collector.
Figure 2 shows the constant focal system.
Figure 3 shows the attachment system of the HCE support to the torque tube, it is to say, the lower part of the constant focal system.
Figure 4 depicts the upper part of the constant focal system.
Figure 5 shows the assembly of the rotational support to the torque tube.
Figure 6 is a bottom view of the parabolic trough collector.
Figure 7 shows the middle of the SCE assembly.
Figure 8 shows a side view of the parabolic trough assembly.
Figures 9 and 10 show the south and north endings of the SCA, respectively.
Figure 11 depicts the preferred bearing system of the invention.
Figure 12 show the mirror attachment system of this invention.
Figure 13 depicts the assembled mirror attachment system.

Here below are listed the different items numbered in Figures 1-13:
- (1): Absorber tube, HCE.
- (2): Reflective surface element, mirror.
- (3): Support structure.
- (4): Counterbalance.
- (5): Rotational support.
- (6): Torque tube.
- (7): Constant Focal System.
- (8): HCE support.
- (9): Linear guide
- (10): Hollow tube arm.
- (11): Union between two torque tubes.
- (12): Support pylon.
- (13): Flexible hose.
- (14): Bearing system housing.
- (15): Bearing wheel.
- (16): Bearing scraper.
- (17): U-conformed plate, bracket.
- (18): Threaded rod.
- (19): Conic seats and nuts.

### DETAILED DESCRIPTION OF THE INVENTION

The parabolic trough according to this invention is preferably a torque tube based system, for example a system with an aperture about of 7500 mm (7.5 m).

The system supports preferably about 164 m² of reflective surface (approximately 142 m² of projected area) (2), divided, preferably into 40 mirrors.

In a preferred embodiment of the invention the mirrors have two different curvatures; it is to say a double focal length.

Thanks to the mirror disposition, both focal lengths lay in the same focal line. The mirrors with the higher focal length are located in the position more distant from the torque tube vertical, so they are called outer, while the others are called inner and are placed the nearest to the torque tube vertical.

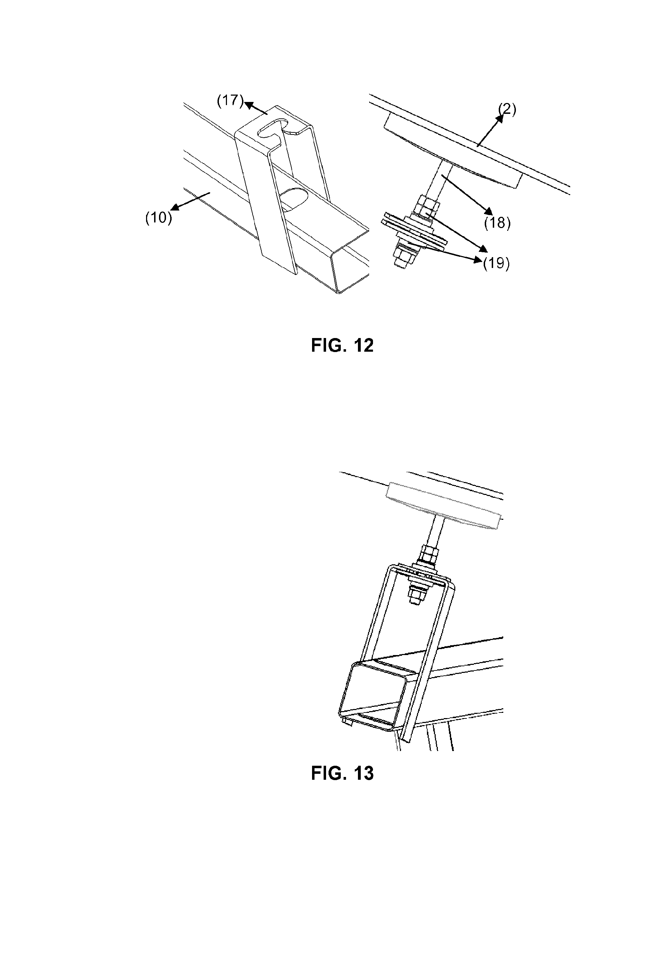

Mirrors can be attached by a conic seat system (Figure 12 and 13) that is fastened to metallic U-conformed plates (17). Attachment interface between these U-conformed plates and the mirror pad is a threaded rod (18) with a serial of conic seats and nuts (19).

U-conformed plates (17) have, preferably, two direction oriented groove holes, allowing the threaded rod entering and the regulation of the mirror tilt without generating additional stress on it.

This system allows the lateral positioning of the attachment interface into the U-conformed plate and its posterior tightening eases and accelerates the assembly process.

This system eases the mirror positioning and attachment, without transmitting to the mirror the stresses due to manufacturing or mounting errors either deforming it. This is a stress free attachment system, which avoid the transmission to the mirrors of stress due to manufacturing or assembly errors in the structure.

The reflective surface has a small gap between mirrors of less than 10 mm (0.01 m), except in the gap between outer and inner mirrors, where this distance increases up to almost 200 mm (0.2 m) in order to reduce the wind load onto the reflective surface. In any case, this reflective area can be considered as continuum, reducing the necessary parabolic trough length.

The reflective area is supported onto hollow tube arms (10). These arms are conformed by welding structural steel hollow tubes, reducing the cost impact, and have a serial of U-conformed plates with groove holes, where mirrors are attached, and groove holes tube endings, that allow their assembly on the torque tube.

Mirrors are fastened to the U-conformed plates helped by threaded rods, nuts and conic seats, avoiding the stress transmission to the reflective surface due to manufacturing or assembly errors.

This assembly system reduces the manufacturing precision required, cuts costs and eases the assembly adjustment. This system compensates the possible manufacturing deviations and helps to reduce the mounting optical errors.

The torque tube is a helical tube that works as rotational axis of the structure. In both endings, it has plaques where another torque tube or a rotational support (5) can be fastened.

The plate that joins two torque tubes (11) or a rotational support (5) has several gussets that strengthen the plate welded union.

The use of two fastened torque tubes in each SCE reduces the torque tubes shipping cost by reducing their length.

The torque tube (6) has several welded plates, which have groove holes where the arms are fastened. These plates are welded in the position where arms must be attached.

Two opposite arms are fastened to the same plate, balancing the stress on the torque tube and avoiding the surface denting.

The rotational support (5) is a very robust item that transmits the torque between consecutive SCEs, reducing the torsion error between both SCE endings that cause optical error and reduces the SCE yield. In addition, this rotational support is the contact surface with the sliding surface, located in the collector pylons (12), where rotational friction is reduced due to both surfaces characteristics.

As a preferred embodiment of this invention, rotational supports turn on bearing systems.

An image of the preferred bearing design is shown in the figure 11, detailing the bearing housing and one of the bearing wheels on which rotational support turns.

Bearing and rotational support designs ensure a torsional error reduction in the SCE because of the friction coefficient.

This invention bearing design has scrapers that avoid the dirt entry into the bearing or onto the friction area, which increases the system life and reduce the possible damages caused by dirt.

Another point to reduce the torsional error is a continuous tracking movement based on a hydraulic system with proportional valves. This system will reduce the torsional angle produce to the static friction of the system continuously starting and stopping, also known as discrete tracking. The inclusion of a proportional valve will allow defining a tracking speed depending on the year day. This system could be complete by a tracking closed control loop, which could vary the tracking speed depending of the difference between the collector actual position and the set one.

The whole SCE turns around this rotational support.

In order to compensate weight and wind loads torque in the system, each SCE is provided of two counterbalances (4).

These counterbalances can be adjusted in two perpendicular directions, in order to compensate the torsional error induced to the collector while varying the tracking angle.

Pylons (12) are metallic welded hollow tube columns that withstand the SCE loads and transmit them to the foundations. Each SCE is supported by two pylons.

The HCE are sustained over the torque tube by a constant focal system (7). This system permits the HCE displacement due to thermal dilation, but keeping it in the right position, avoiding it displacements out the parabolic trough focal line.

It comprises two HCE supports (8) and a linear guide (9). In addition, this system is thermally and electrically insulate, reducing thermal losses and reducing the electrical insulation required if electrical tracing or impedance heating is applied to the piping.

The constant focal system is prepared to use different HCE diameters.

The linear guide (9) is a bearing or friction pad system that allows the linear displacement of the HCE but not others displacements, as laterally.

Linear guide can support a secondary reflector so that collector performance is increased without varying the HCE position in the focal line.

The welded union area between two consecutive HCE receives a flange provided with the linear guide sliding interface. In fact, this flange has the linear displacement capability. So that, the HCE supports maintain the linear guide in the correct position, where HCE flange moves as needed due to HCE thermal dilation. HCE inner tube and glass housing behaves as designed by the supplier, there is not an independent displacement between HCE inner steel tube and housing glass.

The linear guide is sustained by two HCE supports (8). Both HCE are parallel and have in their basis several groove holes that are used to correct placing the HCE in the focal line.

The HCE supports are fastened in the correct position in a stiff way. They are stiff enough to maintain the linear guide correct position.

The constant focal systems are placed in the HCE endings in a way that does not produce shadows nor block solar light, so, added to the always correct focal position, it improves the optical performance and the SCE yield.

The parabolic trough is provided in its endings of flexible hoses (13), reducing the pressure drop in the system and providing more flexibility in the HCE linear displacement.

In addition, this invention is preferably mounted with a linear decentring of the HCE relative to the SCE centre, aiming the exploitation of the reflected solar beam at the parabolic endings.

This decentring is adjustable depending on the solar field latitude and is a linear displacement of the whole absorber tube towards the north direction in the north earth hemisphere, as shown in figures 9 (south ending) and 10 (north ending).

## Claims

1. A focal system (7) for solar concentrators equipped with at least one heat collection element (HCE) (1), **characterised in that** it comprises means configured for maintaining the HCE (1) in a fixed focal line and allowing linear displacements of the HCE along said focal line.

2. A focal system (7) according to claim 1, comprising at least:
- a pair of linear guide systems (9) comprising respective bearings or friction pads configured for allowing linear displacements of the HCE along the focal line of the solar concentrator;
- a pair of HCE supports (8) for maintaining the linear guide systems (9) in the focal line;
- a flange that sustains the HCE, configured to move within the linear guide systems (9).

3. A focal system (7) according to any of claims 1-2 wherein said system is thermally and/or electrically insulated.

4. A solar concentrator comprising, at least, one focal system (7) according to any of claims 1-3.

5. A solar concentrator according to claim 4, comprising a reflective-area support structure comprising a torque tube and hollow tube arms (10).

6. A solar concentrator according to claim 5, wherein the reflective area is supported onto hollow tube arms (10) and said arms (10) are conformed by welding structural steel hollow tubes; and wherein the concentrator comprises:
- a plurality of U-conformed plates with groove holes, where mirrors are attached, and groove-holes tube endings, that allow their assembly on the torque tube;
- an interface between the U-conformed plates and a mirror pad comprising a threaded rod with a plurality of conic seats and nuts.

7. A solar concentrator according to claim 6, wherein the hollow tube arms (10) are fastened to a plate welded onto the torque tube surface, so that the opposite structure arms (10) are fastened to the same plate.

8. A solar concentrator according to any of claims 4-7, comprising a torque tube equipped with end plates fastened to another torque tube or to a rotational support.

9. A solar concentrator according to any of claims 4-8 comprising a bearing system on which the solar concentrator can turn.

10. A solar concentrator according to claim 9, wherein the bearing system comprises scrapers configured to avoid the entry of dirt into the bearings or in friction areas.

11. A solar concentrator according to claims 4-10, comprising a continuous reflective area.

12. A solar concentrator according to claims 4-11 comprising flexible hoses (13) in its endings.

13. A solar concentrator according to any of claims 4-12 comprising means for generating a continuous tracking movement, the means comprising a hydraulic system with proportional valves.

14. A solar concentrator according to claim 13, comprising a tracking closed control loop, which can vary the tracking speed depending of the difference between the concentrator's actual position and the set position.

15. A solar concentrator according to any of claims 4-14, comprising an HCE-attachment system independent of the HCE supports' position, configured for locating the absorber tubes asymmetrically in relation to the concentrator.
